# EUROPEAN PATENT APPLICATION

(11) **EP 1 526 238 A2**
(43) Date of publication of application: **27.04.2005**
(21) Application number: 04256144.9
(22) Date of filing: 04.10.2004
(51) Int. Cl.: E05B 65/12

(54) **Actuator assembly**

(30) Priority: 22.10.2003 GB 0324576
(71) Applicant: ArvinMeritor Light Vehicle Systems (UK) Ltd, Birmingham, West Midlands, B30 3BW (GB)
(72) Inventor: Fisher, Sidney Edward, Redditch, Worcestershire B97 5YS (GB)
(74) Representative: Jones, John Bryn

(57) **Abstract**

An actuator assembly (10,110) including an actuator (12,112), an output member (16,116), and a spring arrangement having at least one spiral return spring (18,118), the output member (16,116) having a neutral position, a first actuated position, and a second actuated position, the neutral position being between the first and second actuated positions, the output member (16,116) capable of being driven by the actuator (12,112) from the neutral position to the first actuated position and to the second actuated position, in which the spring arrangement is arranged so as to bias the output member (16,116) towards the neutral position from the first actuated position, and is also arranged to bias the output member (16,116) towards the neutral position from the second actuated position.

## Description

The present invention relates to actuator assemblies, and in particular to actuator assemblies for use with latches for vehicle doors and other closures.

Known vehicle door latch actuator assemblies include actuators in the form of electric motors to move components of a latch from a neutral position to a locked and an unlocked position.

After the motor has moved the latch to the locked or unlocked position, the motor is powered back in the opposite direction to the neutral position so that when the latch is manually locked or unlocked, for example using a key or a sill button, it is not necessary to manually drive the motor back to the neutral position, thus reducing the effort required.

Known vehicle door latch actuator assemblies include a return mechanism employing a helical spring as shown in EP0267423.

As the motor drives in one direction, one end of the helical spring is rotated about its longitudinal axis relative to the other end leaving the spring in a torsionally loaded state so that when power to the motor is cut, the spring torsionally unwinds so as to bias the motor back towards the neutral position. Thus the need to manually drive the motor back in the opposite direction is avoided.

For the avoidance of doubt, in its simplest form a helical spring is a spring which would be formed by winding wire into a helix along the curved outer surface of an imaginary cylinder. The base of the imaginary cylinder forms a radial plane which lies at one end of the spring at 90 degrees to the central elongate (longitudinal) axis of the spring. A coil of the spring is considered to be a loop of wire which completes a 360 degree circumnavigation of the imaginary cylinder. It will be appreciated that no two points along any given coil exist in any single plane which lies parallel to the radial plane. Figure 14 of US4779912 shows a helical spring. The elongate axis may be curved, i.e. rather than the spring being wound on an imaginary cylinder, it is wound on part of an imaginary torus.

Further for the avoidance of doubt, conical springs are distinct from helical springs in that they are formed by winding wire into a helix along the outer curved surface of a cone. Figure 3 of US4821521 shows a conical spring. Typically, helical and conical springs are used to provide either a compressive or tensile force, in other words to act in an axial manner. However, it is also possible to employ each of these types of spring to provide a torsional bias.

It will be appreciated therefore that helical springs and conical springs are distinct from spiral springs which will be described in further detail shortly.

The problem with known return mechanisms using helical springs is that when loaded, there is a tendency for the stress to concentrate in one area of the helical spring, thereby reducing its fatigue life, resulting in the failure of the return mechanism.

An object of the present invention is to provide an actuator assembly with an increased fatigue life.

Thus according to the present invention there is provided an actuator assembly including an actuator, an output member, and a spring arrangement having at least one spiral return spring, the output member having a neutral position, a first actuated position, and a second actuated position, the neutral position being between the first and second actuated positions, the output member capable of being driven by the actuator from the neutral position to the first actuated position and to the second actuated position, in which the spring arrangement is arranged so as to bias the output member towards the neutral position from the first actuated position, and is also arranged to bias the output member towards the neutral position from the second actuated position.

According to a second aspect of the present invention there is provided an output member subassembly comprising an output member and a spring arrangement having at least one spiral return spring, the output member having a neutral position, a first actuated position, and a second actuated position, the neutral position being between the first and second actuated positions, the output member capable of being driven by an actuator from the neutral position to the first actuated position and to the second actuated position, in which the spring arrangement is arranged so as to bias the output member towards the neutral position from the first actuated position, and to bias the output member towards the neutral position from the second actuated position.

For the avoidance of doubt, a spiral spring can be considered to be a conical spring which has been compressed in the axial direction so that the coils lie one within the next. In other words the spiral spring is a spring formed by winding a strip of metal initially onto a cylinder and then with successive coils being laid onto the previous coil. It will be appreciated that since all of the coils lie in the same plane, the spring can only provide a relatively small amount of axial bias. The purpose of the spiral spring is therefore to provide torsional resistance, rather than the axial resistance offered by either a helical spring or a conical spring.

By using a spiral return spring rather than a helical return spring, the stress associated with winding and unwinding the spiral return spring is more evenly distributed through the spring, and thus the fatigue life is increased.

According to a third aspect of the present invention there is provided a method of assembling an actuator assembly including the steps of providing an actuator, providing an output member, providing a spring arrangement, providing a chassis, assembling the spring arrangement onto the output member so as to provide an output member subassembly, assembling the output member subassembly onto the chassis such that the spring arrangement is in the neutral position, assembling the actuator onto the chassis.

Since the spring arrangement is mounted on the output member to provide a subassembly prior to mounting the subsequently onto the chassis, the potentially complex stage of locating the spring arrangement can be conducted remote from the chassis, thus increasing the efficiency of the assembly process.

According to a fourth aspect of the present invention there is provided a combined spring including a first spiral return spring and a second spiral return spring, the first and second spiral return springs being integral, in which the first spiral return spring of the combined spring is wound in a first direction, and the second spiral return spring of the combined spring is wound in a second direction opposite to the first direction.

The invention will now be described by way of example only with reference to the accompanying drawings, in which:
Figure 1 is a plan view of an actuator assembly according to a first embodiment of the present invention,
Figure 2 is an exploded perspective view of part of the actuator assembly of figure 1 in the neutral position,
Figure 3 is a plan view of part of the actuator assembly of figure 1 after assembly,
Figure 4 is an exploded perspective view of part of an actuator assembly according to a second embodiment of the present invention in the neutral position,
Figure 5 is a plan view of part of the actuator assembly of figure 4 after assembly,
Figure 6 is an exploded perspective view of first and second spiral return springs of an actuator assembly according to a third embodiment of the present invention in their free state,
Figure 7 is an exploded perspective view of part of the actuator assembly of figure 6 in the neutral position,
Figure 8 is an exploded perspective view of part of the actuator assembly of figure 6 after actuation to the first actuated position,
Figure 9 is an exploded perspective view of part an actuator assembly according to a fourth embodiment of the present invention in the neutral position,
Figure 10 is a plan view of part of the actuator assembly of figure 9 after assembly,
Figure 11 is an exploded perspective view of part of an actuator assembly according to a fifth embodiment of the present invention in the neutral position,
Figure 12 is a plan view of part of the actuator assembly of figure 11 after assembly,
Figure 13 is an exploded perspective view of part of an actuator assembly according to a sixth embodiment of the present invention in the neutral position,
Figure 14 is a plan view of part of the actuator assembly of figure 13 after assembly,
Figure 15 is an exploded perspective view of first and second spiral return springs of an actuator assembly according to a seventh embodiment of the present invention in their free state,
Figure 16 is an exploded perspective view of part of the actuator assembly of figure 15 in the neutral position,
Figure 17 is an exploded perspective view of part of the actuator assembly of figure 15 after actuation to the first actuated position,
Figure 18A is a plan view of the first and second spiral return springs of the actuator assembly of figure 15 in their free state,
Figure 18B is a plan view of part of the actuator assembly of figure 15 in the neutral position,
Figure 18C is a plan view of part of the actuator assembly of figure 15 after actuation to the first actuated position,
Figure 19 is an exploded perspective upper view of part of an actuator assembly according to an eight embodiment of the present invention in the neutral position,
Figure 20 is an exploded perspective lower view of the part of the actuator assembly of figure 19 in the neutral position,
Figure 21 is a plan view of the actuator assembly of figure 19 in the neutral position,
Figure 22 is an exploded perspective view of part of an actuator assembly according to a ninth embodiment of the present invention in the neutral position,
Figure 23 is an alternative exploded perspective view of the components of figure 22,
Figure 24A is an enlarged developed view of the combined spring of the actuator assembly of figure 22,
Figure 24B is an enlarged developed view of an alternative combined spring,
Figure 24C is an enlarged developed view of an alternative combined spring,
Figure 25 is a plan view of part of the actuator assembly of figure 22 in the neutral position, and
Figure 26 is a schematic view of a latch assembly including an actuator assembly according to the present invention.

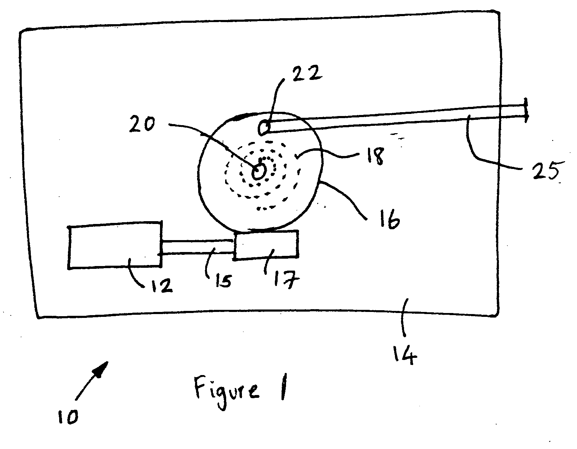

With reference to figure 1, there is shown an actuator assembly 10 including an actuator in the form of an electric motor 12, a chassis 14, an output member in the form of a gear wheel 16, and a spiral return spring 18 (shown hidden in figure 1).

For the avoidance of doubt, a spiral spring is a spring that is wound in substantially one plane and has coils of decreasing diameter, as opposed to a helical spring which has coils of a constant diameter and extending in another plane. Typically a spiral spring is wound from wire having a substantially rectangular cross-sectional profile, and a helical spring is wound from wire having a substantially round cross-sectional profile.

The gear wheel is rotationally mounted on the chassis 14 at pivot pin 20 and includes an output in the form of a pin 22 mounted thereon which is connected to a linkage 24. Linkage 25 is connected to a device (not shown in figure 1) which is required to be actuated.

The electric motor 12 is drivingly connected to the gear wheel 16 by worm gear 17. The worm gear 17 is mounted rotationally fast on electric motor shaft 15 and engages with the gear wheel 16 via gear teeth (not shown). It can be seen from figure 1 that the electric shaft 15 and the worm gear 17 form a transmission path between the electric motor 12 and the gear wheel 16 such that actuation of the electric motor 12 causes the gear wheel 16 to rotate about pivot 20.

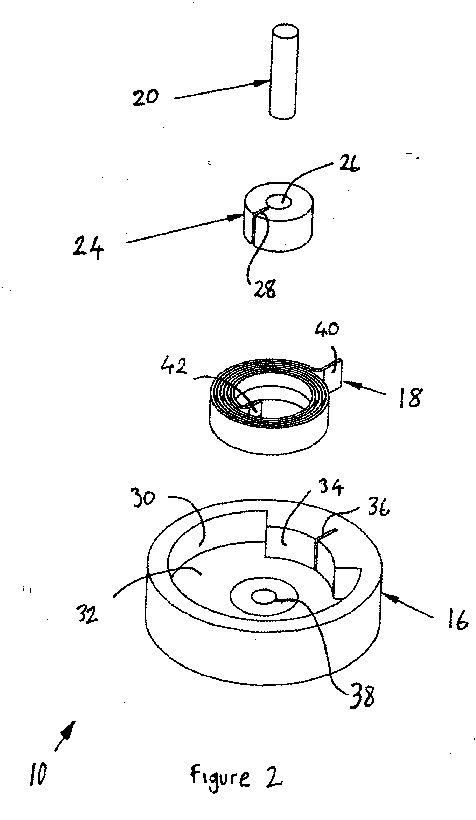

Figure 2 shows components of part of the actuator assembly 10 in more detail.

The actuator assembly 10 further includes a round spigot 24 mounted on and integral with the chassis 14, i.e. rotationally fast with the chassis. The spigot 25 includes a through hole 26 and a spigot slot 28 extending from its periphery towards the through hole 26. Pivot pin 20 extends through hole 26 of the spigot 24, and is mounted on and is rotationally fast with the chassis.

The gear wheel 16 has an outer wall 30 which defines a recess 32, with the recess 32 having a hole 38. The outer wall 30 includes a portion 34 which is of greater thickness than the remainder of the outer wall 32, with the portion 34 including a drive slot 36.

The spiral return spring 18 has an outer arm 40 and an inner arm 42. Figure 2 shows spring 18 in a free state and it can be seen that inner arm 42 and outer arm 40 are aligned.

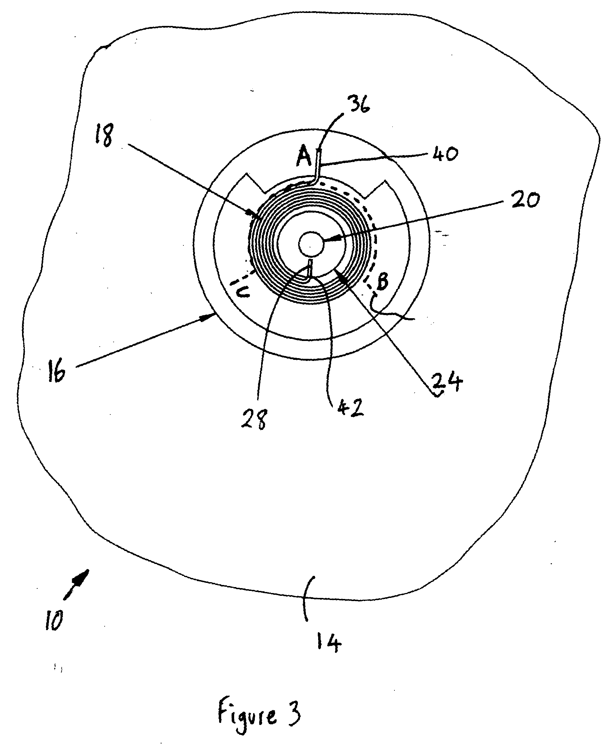

Figure 3 shows the actuator assembly after it has been assembled as follows:
Firstly the spiral return spring 18 is assembled onto the gear wheel 16, with the outer arm 40 of the spiral return spring locating in drive slot 36. The gear wheel 16 is then mounted on the chassis 14 by mounting the gear wheel 16 and spiral return spring 18 onto spigot 24 and pivot pin 20 so that the hole 38 is mounted on pin 20, and at the same time locating the inner arm 42 of the spiral return spring 18 in the spigot slot 28.

In figure 3, the assembly is in a neutral position. The inner and outer arms of spiral return spring 18 are still in alignment and thus the spring is still in its free state once assembled onto the chassis, i.e. the spring is not pre-tensioned. Thus the actuator assembly 10 can be said to have no pre-tensioning.

### Operation of the actuator assembly 10 is as follows:

Figure 3 shows the actuator assembly in a neutral position A.

When actuation is required, an electrical current is supplied to the electric motor 12 resulting in gear wheel 16 rotating in a first direction (clockwise when viewing figure 3) about pivot pin 20 towards a first actuated position B. Typically the neutral and first actuated positions are separated by 120 degrees. As the gear wheel 16 is rotated in the first direction, the outer arm 40 of the spiral return spring 18 moves since it is located in drive slot 36 of the gear wheel 16. The inner arm 42 of the spiral return spring 18 is located in spigot slot 28 and therefore the inner arm 42 does not move (since the spigot is mounted on the chassis). Thus as the gear wheel 16 is rotated in the first direction, the spiral return spring 18 winds up as the outer arm 42 moves towards the inner arm 42.

Once the gear wheel has been actuated to the first actuated position, power to the electric motor is cut. This can be achieved, for example, by powering the motor only for a predetermined time and including stop means (not shown) on the assembly, or by activation of a switch (not shown) which cuts the power, or by using a stepper motor.

With the gear wheel in the first actuated position, the outer arm 42 of the spiral return spring 18 acts upon the drive slot 36 so as to bias the gear wheel back towards the neutral position. The gear wheel will remain in the neutral position until the gear wheel is actuated again. Thus after actuation to the first actuated position, the gear wheel is biased towards the neutral position by the spiral return spring.
It will be appreciated that the electric motor can also drive the gear wheel in a second direction (anti-clockwise when viewing figure 3) towards a second actuated position C. Operation of the assembly in the second direction is identical to that in the first direction except the spiral return spring is unwound when being driven in the second direction by the electric motor. Nevertheless, the gear wheel is still biased towards the neutral position when the gear wheel is at the second actuated position C.

It can also be seen from figure 3 that the neutral position lies between the first and second actuated positions.

It will be appreciated that rotation of the gear wheel in either the first or second direction causes the linkage 24 to move, and the device to which it is connected to move.

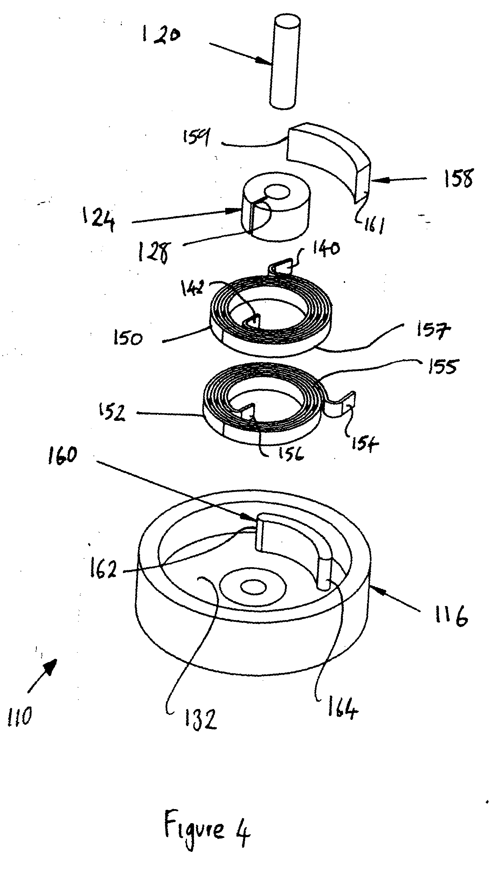

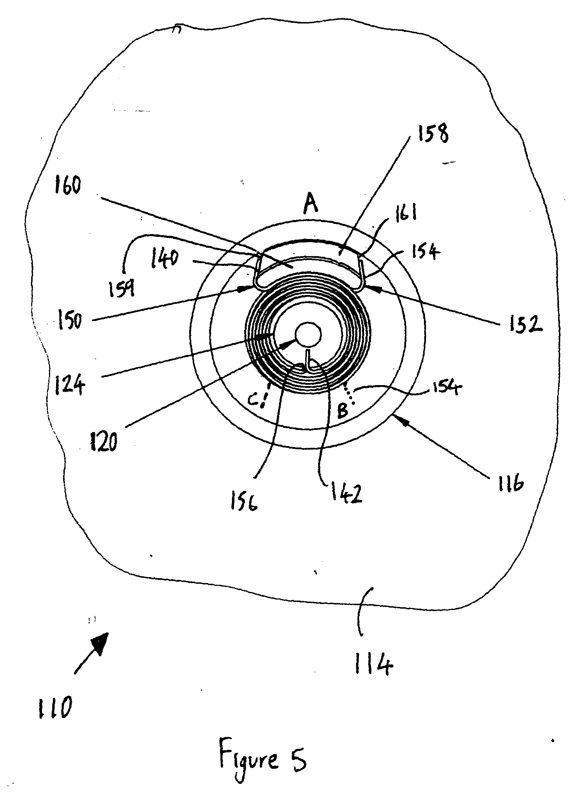

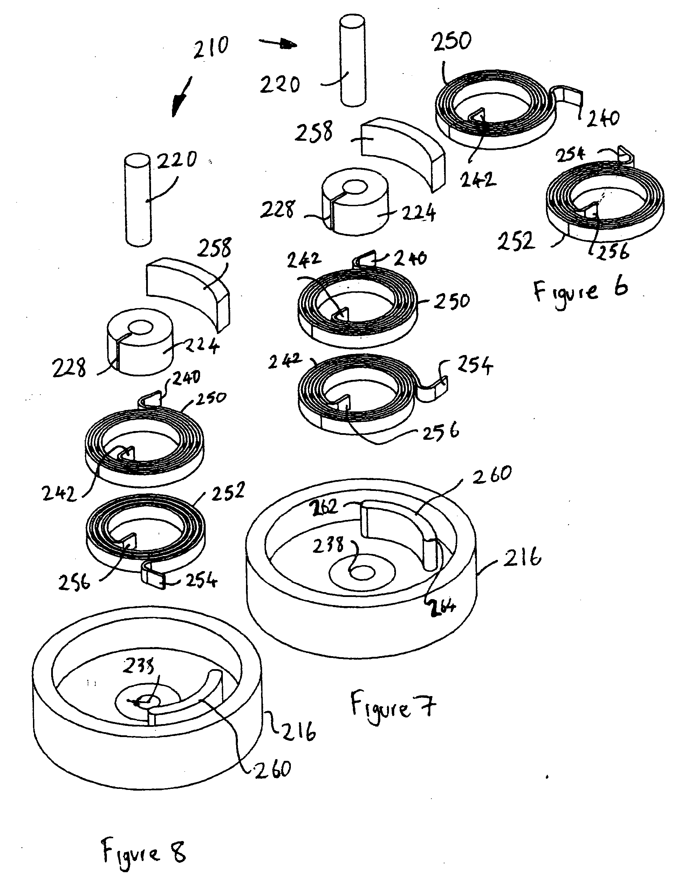

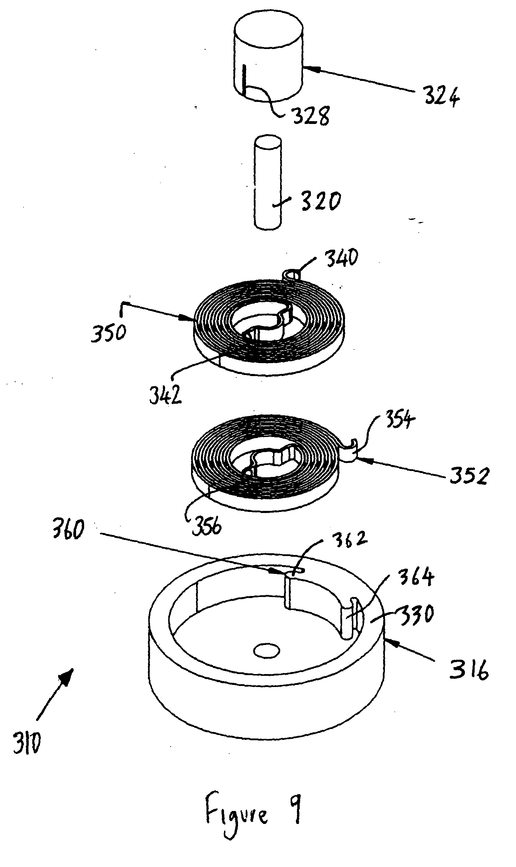

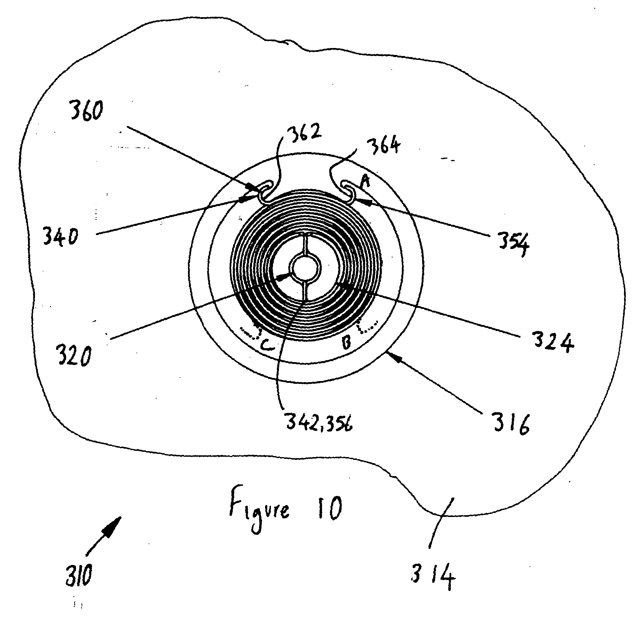

With reference to figures 4 and 5 there is shown part of an actuator assembly 110 according to a second embodiment of the present invention, with features identical or similar to the actuator assembly 10 numbered 100 greater.

The second embodiment uses two spiral return springs as opposed to the one spiral return spring of the first embodiment.

The actuator assembly 110 includes a first spiral return spring 152 having an outer arm 154 and an inner arm 156, and a second spiral return spring 150 having an outer arm 140 and an inner arm 142. It can be seen from figure 4 that the first and second spiral return springs are identical (though one is mounted upside down relative to the other). The first spiral return spring 152 has an upper surface 155 and the second spiral return spring 150 has a lower surface 157. In figure 4 the first and second spiral return springs are in their free state.

The actuator assembly further includes a stop 158 mounted on and integral with the chassis 114. The stop has a first end 159 and a second end 161.

The gear wheel 116 includes a drive formation 160 mounted within the recess 132, the drive formation 160 having a first end 162 and a second end 164. Figure 5 shows the actuator assembly 110 after it has been assembled as follows:

The first 152 and second 150 spiral return springs are assembled onto the chassis 114 such that the outer arm 154 of the first spiral return spring 152 abuts against the second end 161 of stop 158, and outer arm 140 of the second spiral return spring 150 abuts against the first end 159 of stop 158, and the first and second inner arms 156,142 locate in slot 128 of spigot 124. It can be seen from figure 5 that whilst the first and second spiral return springs are identical, they are assembled onto the chassis such that they are wound in opposite directions relative to each other by simply turning one of them upside down.

The gear wheel 116 is then positioned on pivot pin 120 such that the outer arm 154 of the first spiral return spring 152 abuts against the second end 164 of the drive formation 160, and the outer arm 140 of the second spiral return spring 150 abuts against the first end 162 of the drive formation 160.

In figure 5, the assembly is in a neutral position A. As with the actuator assembly 10, the inner and outer arms of spiral return springs 150,152 are still in their same relative positions, and thus the spiral return springs are still in their free state once assembled onto the chassis, i.e. the spiral return springs are not pre-tensioned. Thus the actuator assembly 110 can also be said to have no pre-tensioning.

It can be seen from figures 4 and 5 that the lower surface 157 of the second spring 150 is proximate to the upper surface 155 of the first spring 152. Since the spiral return springs are oppositely wound once assembled, the spring coils are less likely to become entwined if they come into contact.

In an alternative embodiment, a plastic washer (not shown) can be positioned between the first and second springs so as to eliminate the possibility of contact and therefore the springs becoming entwined.

Operation of the actuator assembly 110 is as follows:
Figure 5 shows the actuator assembly in a neutral position A.

As the gear wheel 116 is rotated in a first direction (clockwise when viewing figure 5) by the motor (not shown), the second end 164 of the drive formation 160 abuts against the outer arm 154 of the first spiral return spring 152 so as to move the outer arm 154. The inner arm 156 of the first spiral return spring 152 does not move since it is located in spigot slot 128 and the spigot is integral with the chassis. Thus as the gear wheel 116 is rotated in the first direction, the first spiral return spring 152 winds up as the outer arm 154 moves clockwise relative to the inner arm 156. Thus in this embodiment, the first spiral return spring is wound up due to the rotation of the drive formation 160 relative to the chassis 114.

With the first spiral return spring 152 in a first actuated position B, the outer arm 154 of the first spiral return spring 152 acts upon the second end 164 of the drive formation 160 so as to bias the gear wheel anticlockwise back towards the neutral position A. Thus after actuation to the first actuated position, the gear wheel is biased towards the neutral position by the first spiral return spring.

As the gear wheel 116 is rotated in the first direction, the outer arm 140 of the second spiral return spring 150 remains stationary as the first end 162 of the drive formation 160 moves away from it, and the outer arm 140 abuts against the first end 159 of the stop 158 which does not move since it is integral with the chassis 114. As with the first spiral return spring, the inner arm 142 of the second spiral return spring 150 does not move since it is located in spigot slot 128 and the spigot is integral with the chassis. Thus as the gear wheel 116 is rotated clockwise, neither of the arms 140,142 of the second spiral return spring move, and thus the second spiral return spring is not unwound as the first spiral return spring is wound up, and therefore the actuator does not have to work against the second spiral return spring when driving the actuator in the first direction. Thus when the gear wheel is rotated in the first direction the second spiral return spring is idle.

It will be appreciated that the electric motor can also drive the gear wheel in a second direction (anti-clockwise when viewing figure 5) towards a second actuated position C. Operation of the assembly in the second direction is identical to that in the first direction except it is the second spiral return spring which biases the gear wheel towards the neutral position from the second actuated position. Similarly, the first spiral return spring is not unwound as the second spiral return spring winds up, and it is the first spiral return spring which is idle.

With reference to figures 6 to 8 there is shown part of an actuator assembly 210 according to a third embodiment of the present invention with features identical or similar to the actuator assembly 110 (second embodiment) numbered 100 greater.

The third embodiment differs from the second embodiment only in that the first and second spiral return springs are pre-tensioned when the gear wheel is in the neutral position.

Figure 6 shows both the first and second spiral return springs in their free state (note in particular the relative positions of outer arms 240,254 and inner arms 242,256). As in the second embodiment, the first and second spiral return springs are identical to each other.

In figure 7, the first and second spiral return springs are in their assembled position, and it can be seen by comparing figure 6 (springs in their free state) with figure 7 (springs in their assembled state) that the relative positions of the inner and outer arms of the spiral return springs have changed, specifically the outer arm 240 of the second spiral return spring has moved anti-clockwise relative to the inner arm 242, and the outer arm 254 of the first spiral return spring has moved clockwise relative to the inner arm 256. Thus, in the assembled position of figure 7, both spiral return springs are pre-tensioned. This position corresponds to the neutral position.

Operation of the assembly is identical to the second embodiment except that in order to move the gear wheel in either the first or second direction, the motor must overcome the initial pre-tension of the first or second spiral return spring. Thus more effort is required from the motor to rotate the gear wheel in the first or second direction.

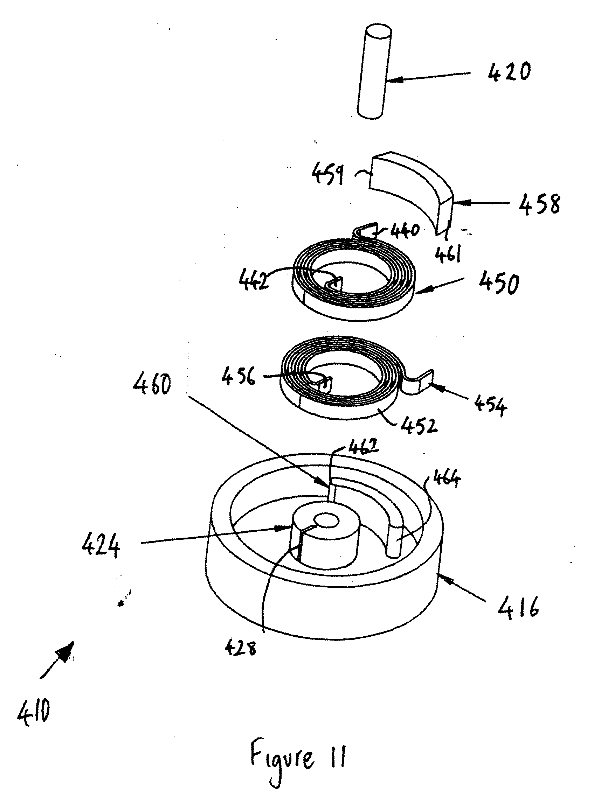

A comparison of figure 7 (neutral position) and figure 8 (first actuated position) shows the relative positions of the first and second spiral return springs after actuation.

Since the actuator must overcome the pre-tension of either the first or second spiral return spring when actuating the gear wheel in either the first or second direction from the neutral position, the neutral position is better defined in comparison to actuator assemblies where the spiral return springs are not pre-tensioned in the neutral position.

Furthermore, it is possible to set the amount of pre-tension in the springs so as to better overcome any friction in the actuator assembly, and thus the gear wheel will always be returned to the neutral position. Thus in an assembly which contains a degree of friction in the components, the pre-tension of the first and second springs will ensure that the gear wheel is returned to the neutral position.

With reference to figures 9 and 10 there is shown part of an actuator assembly 310 according to a fourth embodiment of the present invention, with features identical or similar to the actuator assembly 110 (second embodiment) numbered 200 greater.

In figure 9, the assembly 310 includes a gear wheel 316 with a drive formation 360. The drive formation 360 differs from the drive formation of the second embodiment in that it extends from the outer wall 330 as opposed to being distinct from the outer wall. The drive formation 360 has a first end 362 and a second end 364.

The actuator assembly 310 includes a first spiral return spring 352 having an outer arm 354 and an inner arm 356, and a second spiral return spring 350 having an outer arm 340 and an inner arm 342. The outer arms 340,354 differ from those of the second embodiment in that they are bent over to enable positive location on the first and second ends 362,364 of the drive formation 360. The inner arms 342,356 are also profiled so as to be able to locate in slot 328 of spigot 324, and also to locate around pivot 320.

Figure 10 shows the actuator assembly 310 after it has been assembled as follows:

The first 352 and second 350 spiral return springs are assembled onto the chassis 314 such that the inner arms 342,356 locate in slot 328 of spigot 324. It can be seen from figures 9 and 10 that whilst the first and second spiral return springs are identical, they are assembled onto the chassis such that they are wound in opposite directions relative to each other by simply turning the second spiral return spring upside down.

The gear wheel 316 is then positioned on pivot pin 320 such that the outer arm 340 of the second spiral return spring 350 abuts against the first end 362 of the drive formation 360, and the outer arm 354 of the first spiral return spring 352 abuts against the second end 364 of the drive formation 360.

In figure 10, the assembly is in a neutral position A. The inner and outer arms of the spiral return springs 350,352 are still in their same relative positions, and thus the spiral return springs are still in their free state once assembled onto the chassis, i.e. the spiral return springs are not pre-tensioned. Thus the actuator assembly of figures 9 and 10 has no pre-tensioning.

Operation of the actuator assembly 310 is as follows:

As the gear wheel 316 is rotated in a first direction (clockwise when viewing figure 10) by the motor (not shown), the second end 364 of the drive formation 360 abuts against the outer arm 354 of the first spiral return spring 352 so as to move the outer arm 354. The inner arm 356 of the first spiral return spring 352 does not move since it is located in spigot slot 328 and the spigot is integral with the chassis. Thus as the gear wheel 316 is rotated in the first direction, the first spiral return spring 352 winds up as the outer arm 354 moves clockwise relative to the inner arm 356.

With the first spiral return spring 352 in a first actuated position B, the outer arm 354 of the first spiral return spring 352 acts upon the second end 364 of the drive formation 360 so as to bias the gear wheel back towards the neutral position. Thus after actuation to the first actuated position, the gear wheel is biased towards the neutral position by the first spiral return spring.

As the gear wheel 316 is rotated in the first direction, the outer arm 340 of the second spiral return spring 350 remains stationary as the first end 362 of the drive formation 360 moves away from it. As with the first spiral return spring, the inner arm 342 of the second spiral return spring 350 does not move since it is located in spigot slot 328 and the spigot is integral with the chassis. Thus as the gear wheel 316 rotates clockwise, neither of the arms 340,342 of the second spiral return spring move and thus the second spiral return spring is not unwound as the first spiral return spring is wound up, and therefore the actuator does not have to work against the second spiral return spring when driving the actuator in the first direction. Thus when the gear wheel is rotated in the first direction the second spiral return spring is idle.

It will be appreciated that the electric motor can also rotate the gear wheel in a second direction (anti-clockwise when viewing figure 10) towards a second actuated position C. Operation of the assembly in the second direction is identical to that in the first direction except it is the second spiral return spring which biases the wheel towards the neutral position from the second actuated position. Similarly, the first spiral return spring is not unwound as the second spiral return spring winds up, and it is the first spiral return spring which is idle.

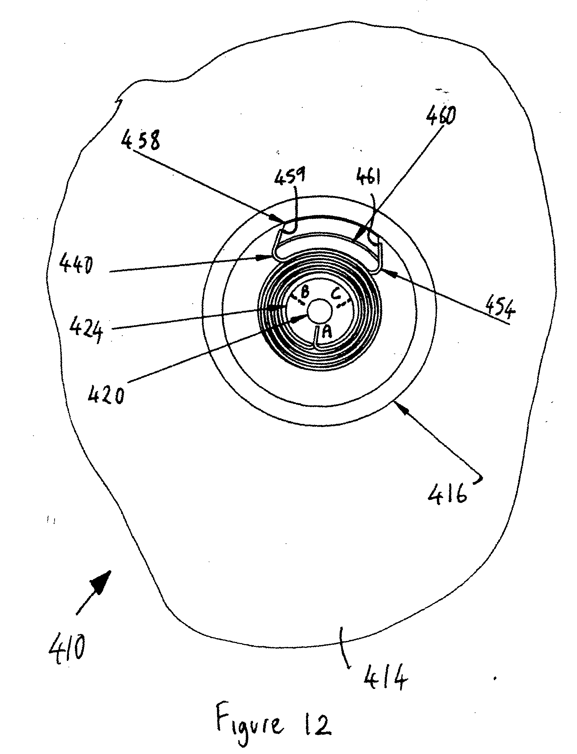

With reference to figures 11 and 12 there is shown part of an actuator assembly 410 according to a fifth embodiment of the present invention, with features identical or similar to the actuator assembly 110 (second embodiment) numbered 200 greater.

The fifth embodiment is identical to the second embodiment except the spigot is integral with the gear wheel, and the spiral return springs have swapped positions, i.e. the first spiral return spring 450 (top spring when viewing figure 11) is above the second spiral return spring 452 (bottom spring when viewing figure 11).

Figure 11 shows that the spigot 424 is integral with the gear wheel 416. Typically the strength requirements of the spigot and the gear wheel are similar, and therefore the combined gear wheel and spigot can be produced as a one-piece moulding.

Figure 12 shows the actuator assembly 410 after it has been assembled as follows:

The second spiral return spring 452 is assembled onto the gear wheel 416 such that the outer arm 454 abuts against the second end 464 of the drive formation 460, and the inner arm 456 locates in drive slot 428. The first spiral return spring 450 is then assembled onto the gear wheel 416 such that the outer arm 440 abuts against the first end 462 of the drive formation 460, and the inner arm 442 locates in drive slot 428.

As in the second embodiment, whilst the first and second spiral return springs are identical, they are assembled onto the gear wheel such that they are wound in opposite directions relative to each other by simply turning the second spiral return spring upside down.

Once the spiral return springs have been assembled onto the gear wheel, the gear wheel can be mounted on to the pivot 420 on the chassis.

Since the first 450 and second 452 spiral return springs are mounted on the gear wheel as opposed to the chassis, it is possible for both the spiral return springs and the gear wheel to be provided as a subassembly which can then subsequently be assembled onto the chassis. This enables more efficient assembly, since the potentially complex stage of locating the springs can be conducted remote from the chassis.

Operation of the actuator assembly 410 is as follows:

With reference to figure 12, as the gear wheel 416 is rotated in the first direction (clockwise), the outer arm 440 of the first spiral return spring 450 remains stationary as the first end 462 of the drive formation 460 moves away from it and the outer arm 440 abuts against the first end 459 of the stop 458 which does not move since it is integral with the chassis 414. The inner arm 442 of the first spiral return spring 450 moves from the neutral position A to the first actuated position B since it is located in spigot slot 428 and the spigot is integral with the gear wheel 416. Thus as the gear wheel 416 is rotated, the first spiral return spring 450 winds up as the inner arm 442 moves towards the outer arm 440 which is prevented from moving in the first direction by stop 458. Thus in this embodiment the first spiral return spring is wound up due to the rotation of the spigot 424 relative to the chassis and not due to rotation of the drive formation relative to the chassis.

In the first actuated position B, the inner arm 442 of the first spiral return spring 450 acts upon the drive slot 428 of the spigot 424 so as to bias the gear wheel back towards the neutral position A. Thus after being actuated to the first actuated position, the gear wheel is biased towards the neutral position by the first spiral return spring.

As the gear wheel 416 is rotated in the first direction, the second end 464 of the drive formation 460 abuts against the outer arm 454 of the second spiral return spring 452 so as to move the outer arm 454 of the second spiral return spring 452. The inner arm 456 of the second spring 452 also moves since it is located in spigot slot 428 and the spigot is integral with the gear wheel 416. Thus as the gear wheel 416 is rotated in the first direction, the second spiral return spring 452 is not wound up since the inner and outer arms do not move relative to each other. Thus the motor does not have to work against the second spiral return spring when driving the gear wheel in the first direction. Thus in this embodiment the second spiral return spring can be classed as idle, but in contrast to the second, third and fourth embodiments, the second spiral return spring is idle because both arms of the second spiral return spring move with the gear wheel and hence there is no relative movement of the arms, as opposed to neither arms moving with the gear wheel where there is no movement at all and hence no relative movement of the arms.

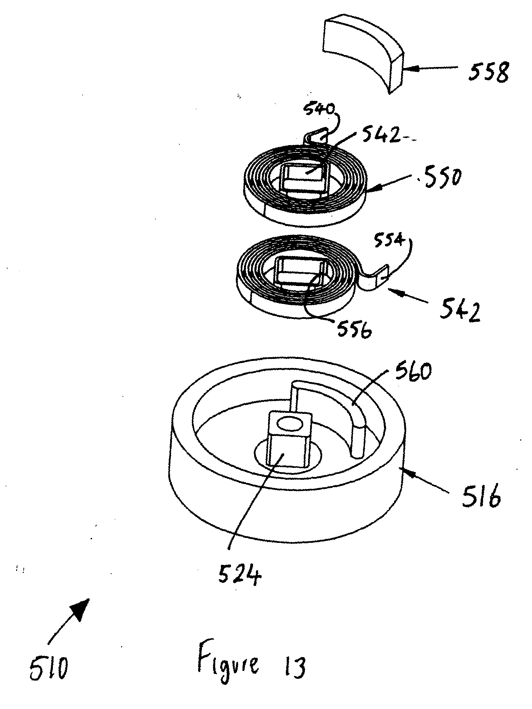

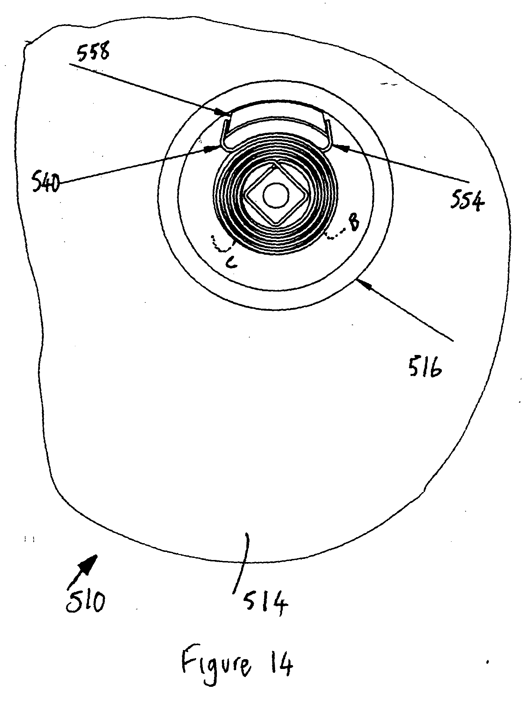

With reference to figures 13 and 14 there is shown part of an actuator assembly 510 according to a sixth embodiment of the present invention with features identical or similar to the actuator assembly 410 (fifth embodiment) numbered 100 greater.

The sixth embodiment is identical to the fifth embodiment except that the assembly has a square spigot and modified spring arms.

In figure 13, the inner arms 542,556 are both bent to form a square profile so as to locate around the square spigot 524, and thus avoid the need for a slot in the spigot to retain the inner arms. This is advantageous since, if there is no slot, the spigot is less likely to burst resulting in failure

The operation of the actuator assembly 510 is identical to the fifth embodiment.

With reference to figures 15 to 18C there is shown part of an actuator assembly 610 according to a seventh embodiment of the present invention, with features identical or similar to the actuator assembly 410 (fifth embodiment) numbered 200 greater.

The seventh embodiment is identical and operates in the same way as the fifth embodiment except that the first and second spiral return springs are pre-tensioned when in the neutral position.

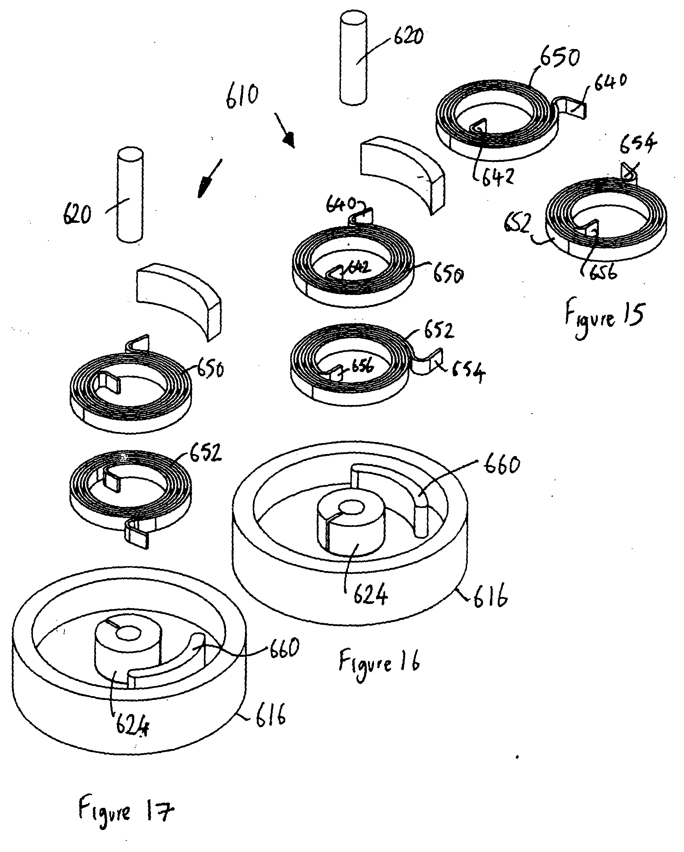

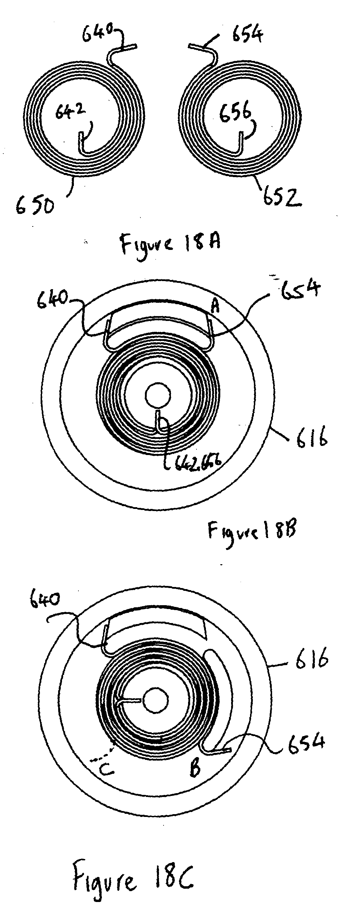

A comparison of figure 15 showing the spiral return springs in their free state, and figure 16 showing the spiral return springs in the neutral position, and figures 18A and 18B, and in particular the relative positions of the spiral return spring outer and inner arms, shows that the spiral return springs are pre-tensioned in the same way as the third embodiment.

Figures 18B (neutral), and 18C (position B) show the positions of the spiral return springs before and after actuation in the first direction to the first actuated position.

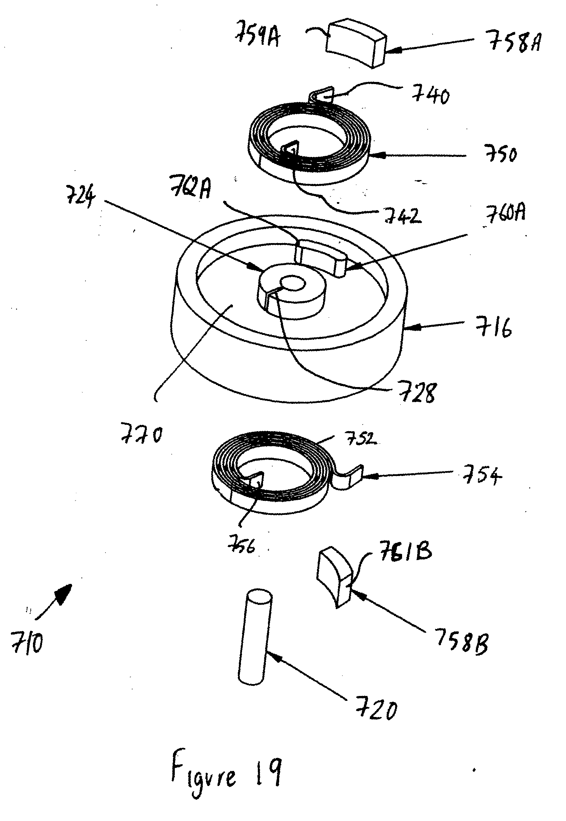

With reference to figures 19 to 21 there is shown part of an actuator assembly 710 according to an eight embodiment of the present invention, with features identical or similar to the actuator assembly 410 (fifth embodiment) numbered 300 greater.

The actuator assembly is identical to the fifth embodiment except that the first and second spiral return springs are mounted on opposite sides of the gear wheel.

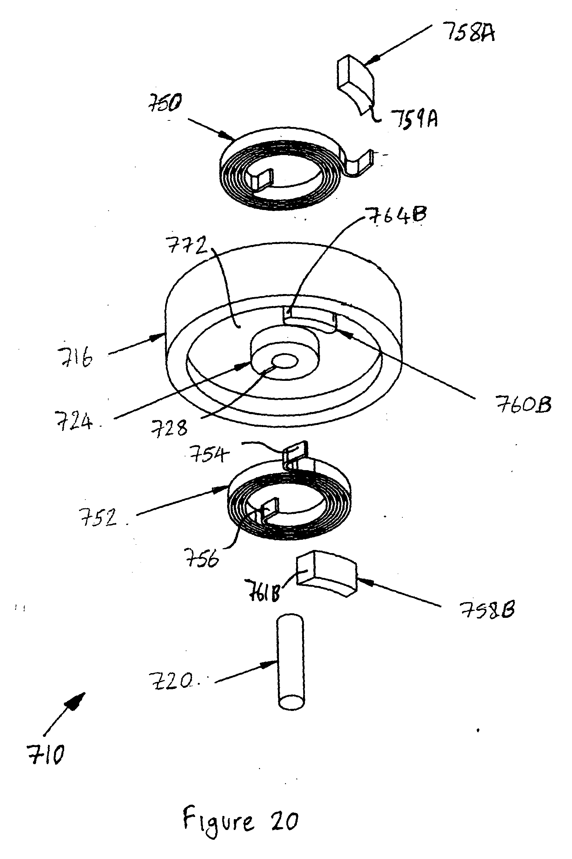

In figures 19 and 20, the gear wheel 716 has an upper surface 770 and a lower surface 772, with the gear wheel 716 including an upper drive formation 760A mounted on the upper surface 770, and a lower drive formation 760B mounted on the lower surface 772. The upper drive formation 760A has a first end 762A, and the lower drive formation 760B has a second end 764B.

The gear wheel has a spigot 724 which is integral with an extends from the upper and lower surfaces of the gear wheel and includes a slot 728.

The first and second spiral return springs are identical to those of the fifth embodiment.

An upper stop 758A is mounted on and integral with an upper part of the chassis 714, and a lower stop 758B is mounted on and integral with a lower part of the chassis 714. The upper stop 758A has a first end 759A, and the lower stop 758B has a second end 761B.

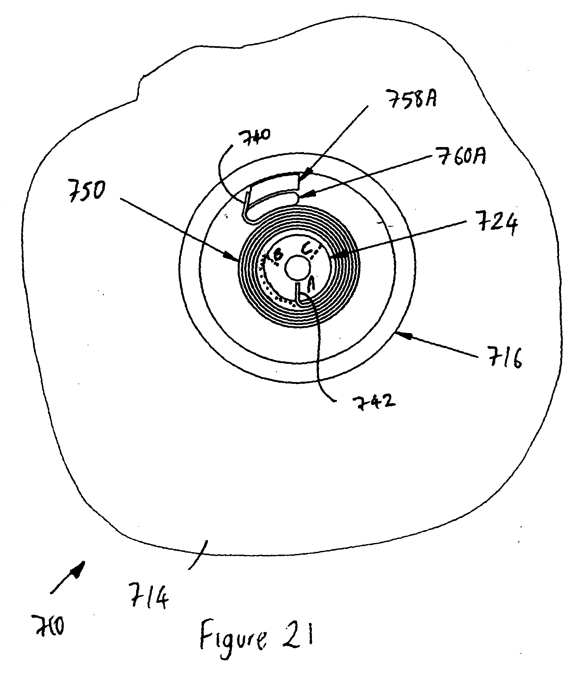

Figure 21 shows the actuator assembly 710 after it has been assembled as follows:

The first spiral return spring 750 is assembled onto the upper surface 770 of the gear wheel 716 such that the outer arm 740 abuts against the first end 762A of the upper drive formation 760A, and the inner arm 742 locates in drive slot 728. The second spiral return spring 752 is assembled onto the lower surface 772 of the gear wheel 716 such that the outer arm 754 abuts against the second end 764B of the lower drive formation 760B, and the inner arm 756 locates in drive slot 728. It can be see from figures 19 and 20 that the first and second spiral return springs are assembled such that they are contra-rotating. Again this can be achieved by simply turning one of them upside down.

By locating the first and second spiral return springs on either side of the gear wheel, the possibility of the springs become entwined is eliminated since they are no longer in physical contact.

After assembling the spiral return springs onto the gear wheel, the gear wheel is then located onto the pivot 720 mounted on the chassis 714.

Operation of the actuator assembly 710 is as follows:

As the gear wheel 716 is rotated in the first direction (clockwise) by the motor (not shown), the outer arm 740 of the first spiral return spring 750 remains stationary as the first end 762A of the upper drive formation 760A moves away from it and the outer arm 740 abuts against the first end 759A of the upper stop 758A which does not move since it is integral with the chassis 714. The inner arm 742 of the first spiral return spring 750 moves since it is located in spigot slot 728 and the spigot is integral with the gear wheel 716. Thus as the gear wheel 716 is rotated, the first spiral return spring 750 winds up as the inner arm 742 moves towards the outer arm 740 which is prevented from moving in the first direction by stop 758.

After actuation in the first direction to the first actuated position B, the inner arm 742 of the first spiral return spring 750 acts upon the drive slot 728 of the spigot 724 so as to bias the gear wheel 716 back towards the neutral position A.

As the gear wheel 716 is rotated in the first direction, the second end 764B of the lower drive formation 760B abuts against the outer arm 754 of the second spiral return spring 752 so as to move the outer arm 754 of the second spiral return spring 752. The inner arm 756 of the second spiral return spring 752 also moves since it is located in spigot slot 728 and the spigot is integral with the gear wheel 716. Thus as the gear wheel 716 is rotated in the first direction, the second spiral return spring 752 is not wound up since the inner and outer arms both move, and thus do not move relative to each other.

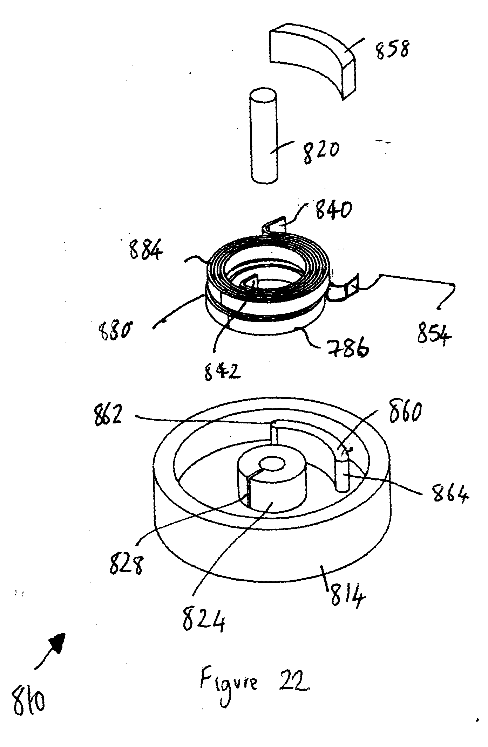

With reference to figures 22 to 24, there is shown part of an actuator assembly 810 according to a ninth embodiment of the present invention, with features identical or similar to the actuator assembly 410 (fifth embodiment) numbered 400 greater.

The ninth embodiment is identical to the fifth embodiment except the first and second spiral return springs are integrated to form a combined spring.

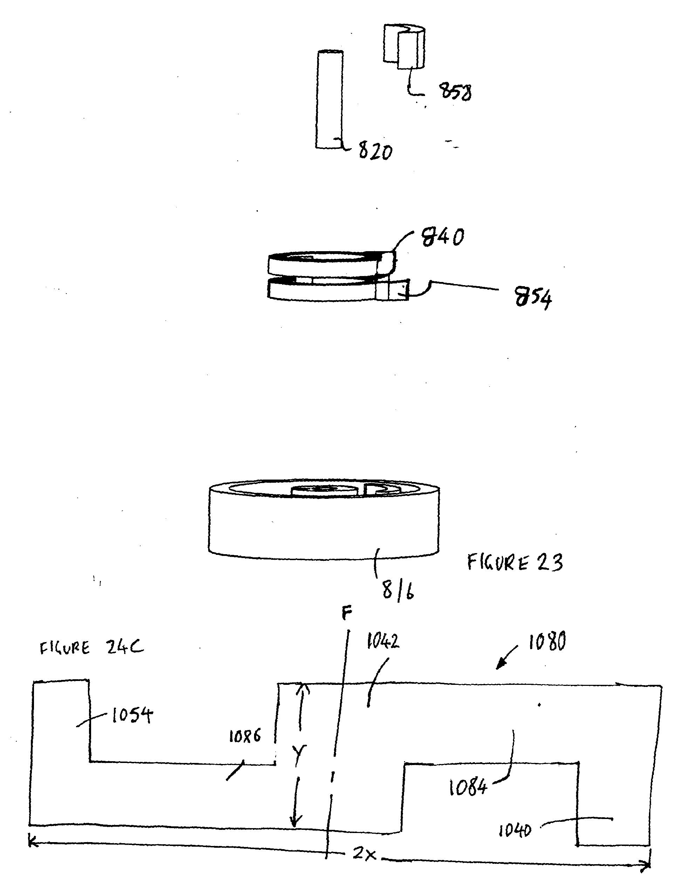

With reference to figure 22 and 23, the assembly includes a spring arrangement in the form of a single combined spring 880. The combined spring 880 is a single component having a common inner arm 842 (as opposed to separate inner arms 442,456 of the fifth embodiment), a first outer arm 854, and a second outer arm 840. The combined spring 880 is arranged such that it is wound anti-clockwise from the inner arm 842 to the second outer arm 840 to form an upper spring portion 884 corresponding to and behaving in the same way as the first spiral return spring of the fifth embodiment, and clockwise from the inner arm 842 to the first outer arm 854 to form a lower spring portion 886 corresponding to and behaving in the same way as the second spiral return spring of the fifth embodiment.

Figure 24A shows a blank of the developed combined spring 880.

Spring 880 is formed by creating an appropriate sized blank of substantially rectangular shape having a length X and a height Y, and cutting a slot 841 of height S about a centre line C of the blank. The remaining part of the blank length which is not cut to form the slot defines the length of the common inner arm 842. The upper spring portion 884 is then wound in one direction about the common inner arm 842, and the lower spring portion 886 is wound in the opposite direction such that the upper and lower portions are contra-rotating. The slot prevents the upper and lower portions from fouling when the portions are wound in opposite directions and during subsequent operation when assembled in the actuator assembly. It can be seen from figure 24A that common inner arm has a height Y, and the first outer arm 854 and the second outer arm 840 have combined heights which equate to the height of the blank taking into consideration the slot height S.

The combined spring 880 is assembled onto the gear wheel 816 such that the first outer arm 854 abuts against the second end 864 of the drive formation 860, and the second outer arm 840 abuts against the first end 862 of the drive formation 860. The common inner arm 842 locates in drive slot 828.

By providing a combined spring as opposed to the two spiral return springs of the fifth embodiment, assembly is made easier by virtue of having one less component. It is also possible to arrange the common inner end 842 such that the upper 884 and lower 886 portions of the spiral return spring are spaced apart, thereby further reducing the possibility of the portions become entwined.

Furthermore, the spring can be assembled either way up without effecting operation of the assembly, and thus assembly is more efficient.

Operation of the actuator assembly 810 is identical to the fifth embodiment, with the upper spring portion 884 acting in the same way as the first spiral return spring 450 and the lower spring portion 886 acting in the same way as the second spiral return spring 452.

Figure 24B shows an alternative combined spring blank 980. The blank 980 differs from the blank of figure 24A in that the slot 941 is formed by first creating a hole 995 at a point on the centre line C corresponding to the edge of the common inner arm 942, and then shearing the blank along the centre line towards the hole 995. The upper 984 and lower 986 portions are then deformed so as to create a gap (not shown) which prevents the upper and lower portions from fouling when the portions are wound in opposite directions and during subsequent operation when assembled in the actuator assembly.

Figure 24C shows an alternative combined spring blank 1080. The blank 1080 differs from the blank of figure 24A in that the blank is substantially S-shaped (with square comers) as opposed to substantially rectangular shaped. The spring is formed by folding the blank about fold line F (situated half way along the length of the blank) to create a common inner arm 1042, and then winding the upper 1084 and lower 1086 portions in opposite directions about the common inner arm. It will be appreciated that the common inner arm 1042 will be twice the thickness of that of blank 880 since the blank is folded over onto itself. Furthermore, it can be seen from figure 24C that the first and second outer arms 1054,1040 are of height Y, i.e. they extend the full height of the blank as opposed to those of the blank of figure 24A which extend approximately half the height of the blank. It will also be appreciated that since the blank is folded about the fold line F, the original length of the blank is twice that of the blank of figure 24A.

In an alternative embodiment the combined spring 880 could be replaced by the combined spring 980 or 1080.

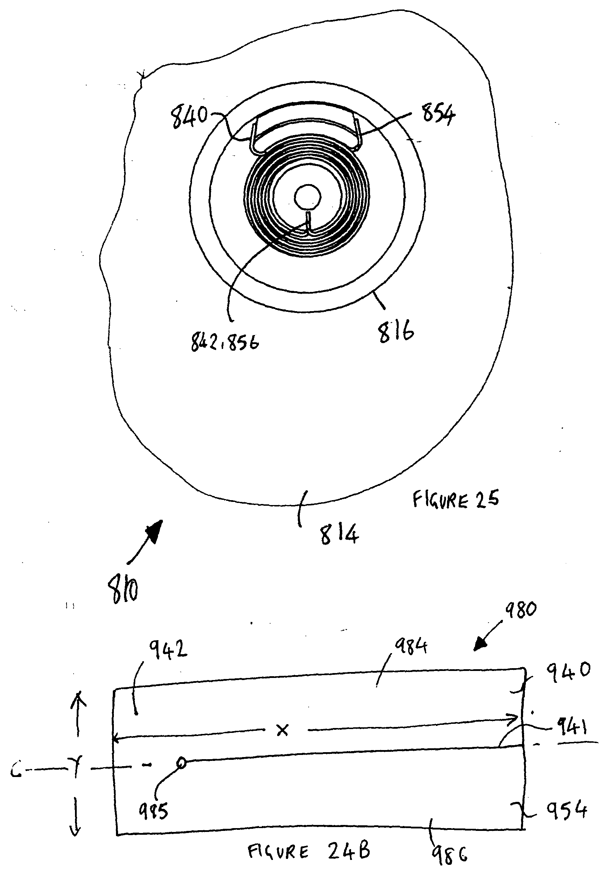

Whilst some of the features in the actuator assemblies of figures 1 to 25 have been described in relation to specific embodiments, it will be appreciated that, where appropriate, most of the different features can be incorporated into the different embodiments.

More particularly, either a square or cylindrical spigot can be used in all of the embodiments, providing the spring inner arms are modified accordingly.

All of the embodiments using a first and second spiral return springs can be modified to have either pre-tension or no pre-tension in the neutral position.

The actuator assemblies described in figures 1 to 25 can be used to drive a linkage connected to the gear wheel in the first and second direction. The actuator assemblies are arranged such that after being driven in the first or second direction, the gear wheel is returned to the neutral position under the action of the spiral return spring.

The linkage can be connected to a component of a device, such that the component can be powered in first or second directions to first or second component positions. Typically, such devices also include manual means to move the component between the first and second component positions, both for convenience and in the event of power failure. Thus after power actuating the component in the first or second direction, the fact that the actuator is returned to the neutral position means that if the manual means is used to move the component, it is not necessary to manually back drive the motor, thus less effort is required.

An example of a device which is powered in first and second directions is a powered locking latch.

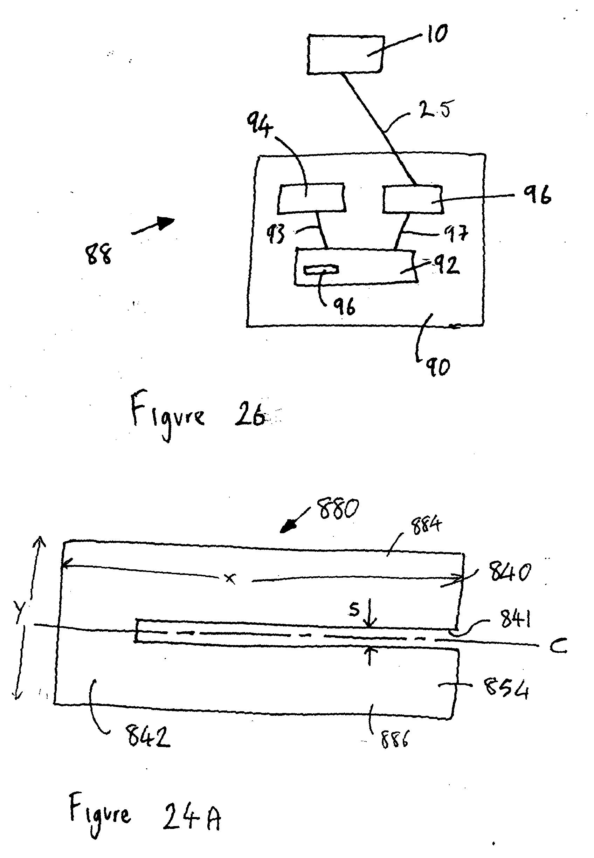

With reference to figure 26 there is shown a latch assembly 88 comprising a latch 90 and the actuator assembly 10.

Latch assembly 88 will typically be used on a land vehicle such as a car or truck. The latch assembly can be used to secure a driver or passenger door closed, or it can be used to secure a boot lid (trunk lid) closed.

The latch 90 includes a locking mechanism 92 which is connected via linkage 93 to manual locking means 94, and via linkage 97 to powered locking means 96. The manual locking means 94 is typically connected to one or more of a sill button (not shown but typically mounted on an inside sill of a door), an inside release lever (not shown), and a key mechanism, (not shown but typically mounted on the outside of a door). The locking mechanism 92 includes a lock link 96.

The actuator assembly 10 is connected to the powered locking means 96 via the linkage 25, such that the electric motor 12 can drive the linkage 25 in first or second directions. Movement of the linkage in the first direction from the neutral position moves the lock link 96 to a first component position where the latch is locked, and movement of the linkage in the second direction from the neutral position moves the lock link 96 to a second component position where the latch is unlocked. In other embodiments the component positions could correspond to, for example, child safety on and child safety off positions.

After the electric motor has driven the lock link 96 to the locked position, the motor is returned to the neutral position by the bias of the spiral spring. The latch can now be power unlocked by driving the motor in the second (opposite direction), or manually unlocked via the manual locking means. Since the motor is in the neutral position, the manual locking means does not have to manually back drive the motor, and therefore operation of the sill button, key, or inside release lever does not require the extra effort of having to manually back drive the motor.

Thus it can be seen that by employing the actuator assembly of the present invention in a powered locking latch, the motor does not have to be back driven, be it manually or by operating the motor in the opposite direction.

In other embodiments, the actuator assembly 10 could be replaced by any of the actuator assemblies of figures 4 to 25.

In another embodiment, the gear wheel could be directly connected to the locking mechanism, as opposed to via the linkage.

## Claims

1. An actuator assembly (10, 110) including an actuator (12, 112), an output member (16, 116), and a spring arrangement having at least one spiral return spring (18, 118), the output member (16, 116) having a neutral position, a first actuated position, and a second actuated position, the neutral position being between the first and second actuated positions, the output member capable of being driven by the actuator (12, 112) from the neutral position to the first actuated position and to the second actuated position, in which the spring arrangement is arranged so as to bias the output member (16, 116) towards the neutral position from the first actuated position, and is also arranged to bias the output member (16, 116) towards the neutral position from the second actuated position.

2. An actuator assembly (110) according to claim 1, the spring arrangement including a first spiral return spring (152) and a second spiral return spring (150), in which the first spiral return spring biases the output member (116) from the first actuated position towards the neutral position, and the second spiral return spring biases the output member from the second actuated position towards the neutral position.

3. An actuator assembly according to claim 2, in which the first spiral return spring (152) and the second spiral return spring (150) are pre-tensioned in the neutral position.

4. An actuator assembly according to claim 2 or 3 in which the first and second spiral return springs (152, 150) are arranged such that they are contra-rotating relative to each other.

5. An actuator assembly according to any one of claims 2 to 4, in which the first spiral return spring (152) has a first outer arm (154) and a first inner arm (156), and the second spiral return spring (150) has a second outer arm (140) and a second inner arm (142), in which during actuation of the output member (116) to the first actuated position there is relative movement between the inner and outer arm of the first spiral return spring (152), such that the first spiral return spring (152) biases the output member (116) towards the neutral point, and there is no relative movement between the inner and outer arms of the second spiral return spring (150).

6. An actuator assembly (110) according to claim 5 in which during actuation of the output member (116) to the first actuated position the first inner arm does not move, and the first outer arm (154) moves with the output member (116), or the first outer arm (154) does not move and the first inner arm (156) moves with the output member.

7. An actuator assembly (110) according to claims 5 or 6 in which the second inner and second outer arms (142, 140) move with the output member (116) such that there is no relative movement between the second inner and outer arms (142, 140).

8. An actuator assembly (110) according to claims 5 or 6 in which the second inner and second outer arms (142, 140) do not move such that there is no relative movement between the second inner and outer arms (142, 140).

9. An actuator assembly (110) according to any one of claims 5 to 8 including a spigot (124), the spigot having a slot (128), in which the first and second inner arms locate.

10. An actuator assembly (110) according to any one of claims 2 to 9 in which the first spiral return spring (152) is mounted on a first side of the output member (116), and the second spiral return spring (150) is mounted on a second side of the output member (116).

11. An actuator assembly according to any one of claims 2 to 10, in which the spring arrangement is in the form of a combined spring including the first spiral return spring and the second spiral return spring, the first and second spiral return springs arranged so as to be integral and contra-rotating.

12. A latch assembly (88) including a latch (90) and an actuator assembly according to any preceding claim, in which the actuator is operable to move a component of the latch (90) to a first component position preferably corresponding to a locked state of the latch (90) and a second component position preferably corresponding to an unlocked state of the latch (90), thereby changing the latch state.

13. An output member subassembly comprising an output member, and a spring arrangement having at least one spiral return spring, the output member having a neutral position, a first actuated position, and a second actuated position, the neutral position being between the first and second actuated positions, the output member capable of being driven by an actuator from the neutral position to the first actuated position and to the second actuated position, in which the spring arrangement is arranged so as to bias the output member towards the neutral position from the first actuated position, and to bias the output member towards the neutral position from the second actuated position.

14. A method of assembling an actuator assembly including the steps of:
providing an actuator,
providing an output member,
providing a spring arrangement,
providing a chassis,
assembling the spring arrangement onto the output member so as to provide an output member subassembly,
assembling the output member subassembly onto the chassis such that the spring arrangement is in the neutral position,
assembling the actuator onto the chassis.

15. An output member according to claim 13 or a method of assembling an actuator assembly according to claim 14 in which spring arrangement is pre-tensioned in the neutral position.

16. A combined spring including a first spiral return spring and a second spiral return spring, the first and second spiral return springs being integral, in which the first spiral return spring of the combined spring is wound in a first direction, and the second spiral return spring of the combined spring is wound in a second direction opposite to the first direction.
